# EUROPÄISCHE PATENTANMELDUNG

(11) **EP 1 612 069 A1**
(43) Veröffentlichungstag der Anmeldung: **04.01.2006**
(21) Anmeldenummer: 05400019.5
(22) Anmeldetag: 01.07.2005
(51) Int. Cl.: B60J 1/02, B60J 7/14

(54) **Cabriolet mit vergrößertem Fahrgastraum**

(30) Priorität: 03.07.2004 DE 102004032295
(71) Anmelder: GM Global Technology Operations, Inc., Detroit, MI 48265-3000 (US)
(72) Erfinder: Hallik, Matthias, 65207 Wiesbaden (DE)
(74) Vertreter: Daniel, Ulrich W.P.

(57) **Zusammenfassung**

Bei einem Cabriolet mit einer Karosserie, einer Windschutzscheibe (6) sowie mit wenigstens einem Dachsegment (8) und einer Heckscheibe (13), die zwischen einer ein geschlossenes Dach (8) bildenden Stellung und einer zurückgezogenen Stellung beweglich sind, erstreckt sich die Windschutzscheibe (6) sich bis zu B-Säulen (4) der Karosserie und ist an den B-Säulen (4) abgestützt.

## Beschreibung

Die vorliegende Erfindung betrifft ein Cabriolet in Hardtop-Bauweise, bei der ein Dachsegment und eine Heckscheibe zwischen einer ein geschlossenes Dach bildenden Stellung und einer zurückgezogenen Stellung beweglich sind. Ein solches Dach ist z.B. in EP 0 992 384 A2 und in DE 100 25 051 C1 beschrieben.

Ein Problem bei derartigen Cabriolets ist die Unterbringung von Heckscheibe und Dachsegment in der zurückgezogenen Stellung. EP 0 992 384 A2 schlägt vor, die Heckscheibe gegen die Hutablage abzusenken, so dass zwei Dachsegmente in die zuvor von der Heckscheibe eingenommene Position verschoben werden können, und anschließend den so gebildeten Stapel aus Heckscheibe und Dachsegmenten auf die Hutablage abzusenken. Die Länge der Hutablage in Fahrtrichtung muss wenigstens so groß sein wie die der Heckscheibe oder der Dachsegmente, da diese andernfalls in den Bereich einer hinteren Sitzreihe des Fahrzeugs vorstehen und diese unbenutzbar machen würden. Der große Platzbedarf der Hutablage zwingt dazu, entweder die Kofferraumklappe sehr kurz zu machen, was die Nutzung des Kofferraums erschwert, oder den Abstand zwischen den Sitzreihen des Fahrzeugs kurz zu machen, was den Komfort der Fondpassagiere beeinträchtigt.

DE 100 25 051 C1 schlägt eine Konstruktion mit einer Heckscheibe und einem einzigen beweglichen Dachsegment vor, die in der zurückgezogenen Stellung aufeinandergestapelt auf der Kofferraumklappe ruhen. Hierfür dürfen Dachsegment und Heckscheibe nicht wesentlich länger sein als die Kofferraumklappe selbst. Um die Länge des Fahrgastraums überbrücken zu können, ist man daher gezwungen, das Dachsegment und die Heckscheibe in etwa gleich lang zu machen, und um beide platzsparend stapeln zu können, darf die Heckscheibe in Längsrichtung nicht wesentlich stärker gekrümmt sein als das Dach. Der Fond der Fahrgastzelle ist daher bei geschlossenem Dach sehr niedrig und für erwachsene Passagiere unkomfortabel.

Aufgabe der vorliegenden Erfindung ist, ein Konzept für ein Cabriolet zu schaffen, das die Probleme bei der Unterbringung von Heckscheibe und Dachteilen in der zurückgezogenen Stellung löst und es gleichzeitig erlaubt, auch den Fondpassagieren reichlich Platz zur Verfügung zu stellen.

Die Aufgabe wird bei einem Cabriolet mit einer Karosserie, einer Windschutzscheibe sowie mit wenigstens einem Dachsegment und einer Heckscheibe, die zwischen einer ein geschlossenes Dach bildenden Stellung und einer zurückgezogenen Stellung beweglich sind, dadurch gelöst, dass die Windschutzscheibe bis zu den B-Säulen der Karosserie verlängert ist und an diesen abgestützt ist. Die Windschutzscheibe erstreckt sich so in einen Bereich, in dem sich bei den gegenwärtig verbreiteten Kraftfahrzeugkarosserien ein Teil des Daches erstreckt. Das bewegliche Dachsegment, dessen Länge aufgrund der Notwendigkeit, es im zurückgezogenen Zustand an der Karosserie unterzubringen, beschränkt ist, kann daher relativ kurz bemessen sein und in der das Dach bildenden Stellung vergleichsweise weit hinten am Fahrzeug, im Wesentlichen nur über den Fondplätzen, angeordnet sein. Den Fondpassagieren kann so erheblich mehr Beinfreiheit zugestanden werden als bei einer Konstruktion, bei der das Dachsegment auch einen Teil der vorderen Sitze überdecken muss.

Der mit dieser Konstruktion mögliche Zugewinn an Länge des Fahrgastraums ist so groß, dass das erfindungsgemäße Cabriolet sogar viertürig ausgebildet werden kann, was für die Fondpassagiere einen zusätzlichen Gewinn an Komfort beinhaltet.

Die Stabilität der Karosserie des Cabriolets ist verbessert, wenn die B-Säulen durch einen die Windschutzscheibe abstützenden Bügel untereinander verbunden sind.

Das wenigstens eine Dachsegment ist vorzugsweise mit Glas aufgeführt, besonders bevorzugt in Form einer Vollverglasung, d.h. mit einer sich über die gesamte Länge des Dachsegments erstreckenden Glasoberfläche. Indem diese Glasoberfläche eine stetige Fortsetzung der Außenfläche der verlängerten Windschutzscheibe bildet, kann der Eindruck einer so gut wie nur aus Glas bestehenden Kuppel über dem Fahrgastraum hervorgerufen werden.

Um eine unerwünschte Erhitzung des Fahrgastraums bei Sonneneinstrahlung zu verhindern, ist das Glas des Dachsegments vorzugsweise elektrochromatisch. Auch die Windschutzscheibe ist vorteilhafterweise auf wenigstens einem Teil ihrer Fläche elektrochromatisch. Dieser elektrochromatische Teil umfasst insbesondere einen oberen hinteren Teil der Windschutzscheibe, der über den Köpfen der Passagiere auf den vorderen Sitzen und außerhalb des zum Fahren benötigten Blickfeldes eines Fahrers liegt.

Einer bevorzugten Weiterentwicklung zufolge sollte der elektrochromatische Teil der Windschutzscheibe wenigstens zwei unabhängig voneinander verdunkelbare Zonen umfassen. Diese unabhängig verdunkelbaren Zonen können nebeneinander liegen, um so unterschiedlichen Bedürfnissen von Fahrer und Beifahrer Rechnung tragen zu können; besonders bevorzugt ist, dass sie in Fahrtrichtung gestaffelt sind, so dass eine dieser Zonen die Funktion einer herkömmlichen Sonnenblende übernehmen kann.

Alternativ besteht die Möglichkeit, eine Sonnenblende jeweils an einer A-Säule des Fahrzeugs versenkbar zu montieren.

Dachsegment und Heckscheibe sind in der zurückgezogenen Stellung vorzugsweise in einem Kofferraum des Fahrzeugs aufgenommen, so dass sie keine vorstehenden scharfen Kanten an der Außenkontur des Fahrzeugs bilden, die während der Fahrt störende Strömungsgeräusche verursachen könnten.

Um den Eindruck einer leichten, praktisch nur aus Glas bestehenden Kuppel über dem Fahrgastraum zu unterstreichen, sind Türfenster des erfindungsgemäßen Cabriolet vorzugsweise rahmenlos ausgebildet.

Weitere Merkmale und Vorteile der Erfindung ergeben sich aus der nachfolgenden Beschreibung von Ausführungsbeispielen mit Bezug auf die beigefügten Figuren. Es zeigen:
- Fig. 1: eine schematische perspektivische Ansicht eines erfindungsgemäßen Cabriolets mit Dachsegment und Heckscheibe in einer ein geschlossenes Dach bildenden Stellung;
- Fig. 2: das Cabriolet aus Fig. 1 mit Dachsegment und Heckscheibe in einer Zwischenstellung zwischen der das geschlossene Dach bildenden Stellung und einer zurückgezogenen Stellung;
- Fig. 3: dasselbe Cabriolet mit Dachsegment und Heckscheibe in der zurückgezogenen Stellung;
- Fig. 4: eine bevorzugte Weiterbildung des Cabriolets aus Fig. 1;
- Fig. 5: einen Teilschnitt durch eine A-Säule und Teile der Windschutzscheibe und einer Türfensterscheibe gemäß einer alternativen Ausgestaltung, quer zur Fahrtrichtung; und
- Fig. 6: einen schematischen Schnitt durch einen Teil der Windschutzscheibe gemäß der alternativen Ausgestaltung, parallel zur Fahrtrichtung.

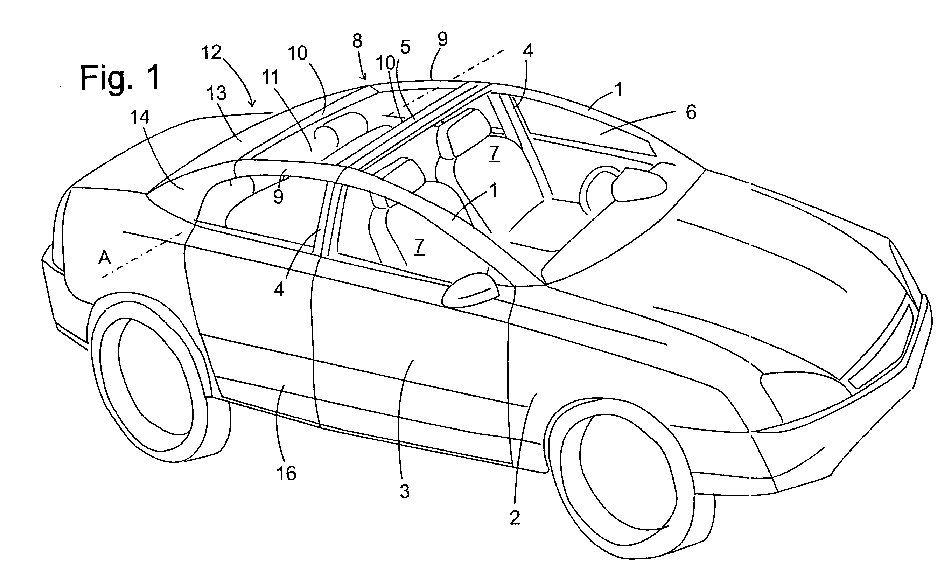

Fig. 1 zeigt als ein Ausführungsbeispiel der Erfindung ein viertüriges Cabriolet. Die Karosserie des Cabriolets hat rechte und linke A-Säulen 1, die sich in einem gleichmäßig geschwungenen Bogen von einer Basis an den vorderen Kotflügeln 2 über die vorderen Türen 3 hinweg zu B-Säulen 4 erstrecken, auf denen sie abgestützt sind. An den B-Säulen 4 sind die hinteren Türen 16 aufgehängt. Die B-Säulen 4 sind untereinander durch einen sich quer über den Fahrgastraum spannenden Bügel 5 verbunden.

Eine Windschutzscheibe 6 ist in seitlicher Richtung zwischen den zwei A-Säulen 1 eingefasst und erstreckt sich in Längsrichtung bis zu dem Bügel 5. Die von dem Bügel 5 abgestützte hintere Kante der Windschutzscheibe 6 befindet sich über den Rückenlehnen von Vordersitzen 7 des Fahrzeugs.

Ein bewegliches Dachsegment 8 schließt sich an die Hinterkante der Windschutzscheibe 6 an. Das Dachsegment 8 ist im Wesentlichen aufgebaut aus einem vierseitigen Rahmen mit zwei Längsstreben 9 und zwei Querstreben 10 sowie einer von dem Rahmen getragenen Glasscheibe 11. Die Glasscheibe 11 ist in seitlicher Richtung von den Längsstreben 9 in gleicher Weise eingefasst wie die Windschutzscheibe 6 von den A-Säulen 1; die Querstreben 10 sind, von außen betrachtet, durch die Glasscheibe 11 überdeckt, so dass deren vordere Kante unmittelbar an die Hinterkante der Windschutzscheibe 6 anschließt.

An das Dachsegment 8 wiederum schließt sich ein Heckscheibensegment 12 an, bei dem eine Heckscheibe 13 in einem von zwei Seitenwangen 14 und in der Figur nicht sichtbaren, die Seitenwangen 14 untereinander verbindenden Querstreben gehalten ist. Auch hier überdeckt die Heckscheibe die Querstreben, so dass ihre Vorderkante unmittelbar an die Hinterkante der Glasscheibe 11 anschließt.

Das Heckscheibensegment 12 ist mit dem Unterteil der Karosserie um eine Achse A schwenkbar verbunden. Das Dachsegment 8 ist einerseits mit dem Heckscheibensegment 12 gelenkig verbunden und andererseits am Bügel 5 abgestützt und verrastet.

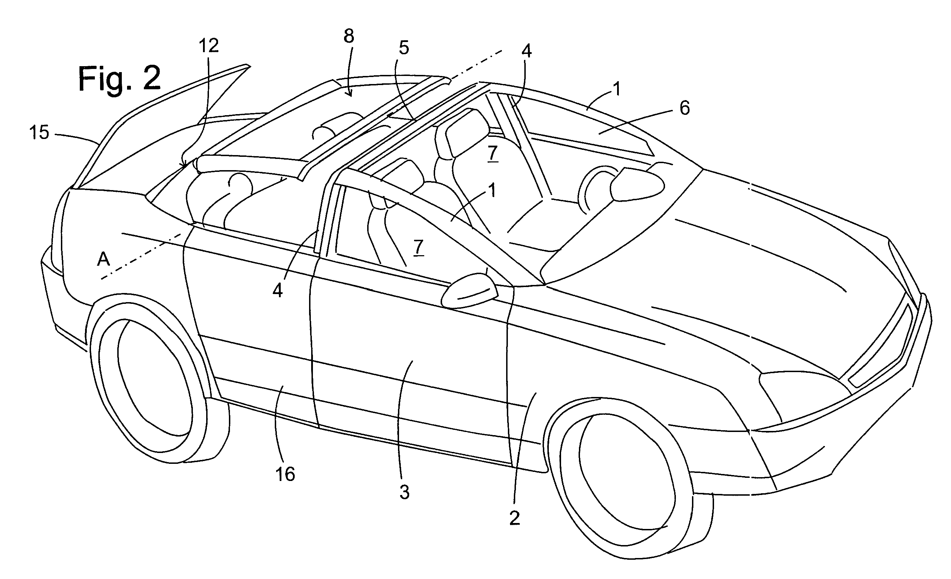

Fig. 2 zeigt dasselbe Fahrzeug mit Dachsegment 8 und Heckscheibensegment 12 in einer teilweise geöffneten Stellung. Die Kofferraumklappe 15 des Fahrzeugs ist hochgeklappt, das Heckscheibensegment 12 ist ein Stück weit um die Achse A geschwenkt und beginnt, in den Kofferraum einzutauchen, und das vom Bügel 5 entrastete Dachsegment 8 ist ein Stück weit zurückgezogen.

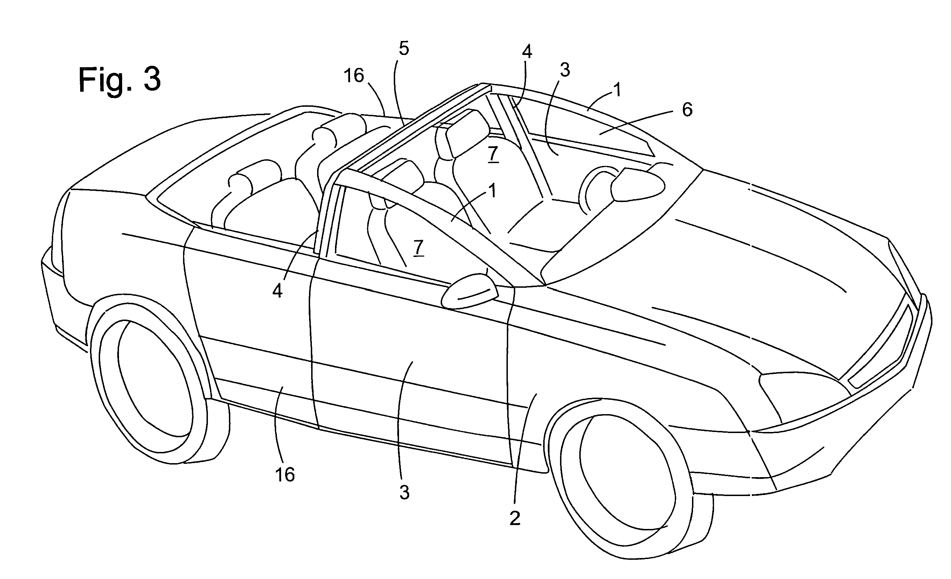

Wenn das Heckscheibensegment 12 bis zum Anschlag um die Achse A geschwenkt ist, kommen es und das Dachsegment 8 innerhalb des Kofferraums zu liegen. Die Kofferraumklappe 15 wird dann wieder geschlossen, und der sich ergebende Zustand ist in Fig. 3 gezeigt. Die rahmenlosen Fensterscheiben der hinteren Türen 16 sind in bekannter Weise in die Türkörper hinein versenkt. Das Verdeck des Fahrzeugs ist so zwar offen, doch sind durch die weit nach hinten gezogene Windschutzscheibe 6 die Passagiere auf den vorderen Sitzen 7 vollständig und auch im Fond besser als bei herkömmlichen Cabriolets vor Zug geschützt.

Um einen Schutz der Passagiere vor unerwünschter Sonneneinstrahlung zu ermöglichen, können beispielsweise Rollos in den Streben 9 oder 10 des Dachsegments 8 herausziehbar angeordnet sein, so dass sie im Bedarfsfalle unter der Glasscheibe 11 aufgespannt werden können. Ein entsprechendes Rollo könnte auch in einem Hohlraum des Bügels 5 herausziehbar vorgesehen sein, um es unter einem oberen Bereich der Windschutzscheibe 6 aufzuspannen.

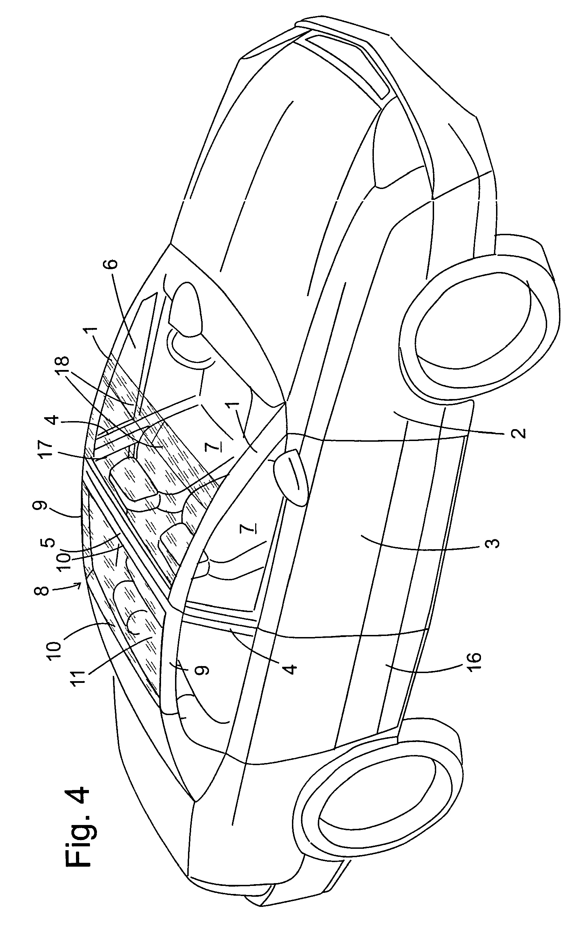

Komfortabler ist jedoch die in Fig. 4 dargestellte Lösung, bei der die Glasscheibe 11 des Dachsegments auf ihrer gesamten Fläche und die Windschutzscheibe 6 in einem oberen Bereich elektrochromatisch ausgestattet sind. Elektrochromatische Scheiben sind an sich bekannt und brauchen daher nicht im Detail beschrieben zu werden; sie sind beispielsweise realisierbar mit einer zwischen zwei Lagen einer Glasscheibe eingeschlossenen Flüssigkristallschicht, deren Lichtdurchlässigkeit mit Hilfe einer elektrischen Spannung regelbar ist, die an auf die Lagen aufgedampfte, lichtdurchlässige Elektroden angelegt wird.

Bei dem in Fig. 4 gezeigten Fahrzeug ist der elektrochromatische Bereich der Windschutzscheibe 6 unterteilt in einen Dachabschnitt 17, der sich im Wesentlichen oberhalb der Sitzflächen der Vordersitze 7 erstreckt, und zwei Blendabschnitte 18, die jeweils über Fahrer- bzw. Beifahrersitz 7 dem Dachabschnitt 17 vorgelagert sind und die unabhängig voneinander und vom Dachabschnitt 17 verdunkelbar sind, um jeweils die Funktionen einer herkömmlichen Sonnenblende zu übernehmen.

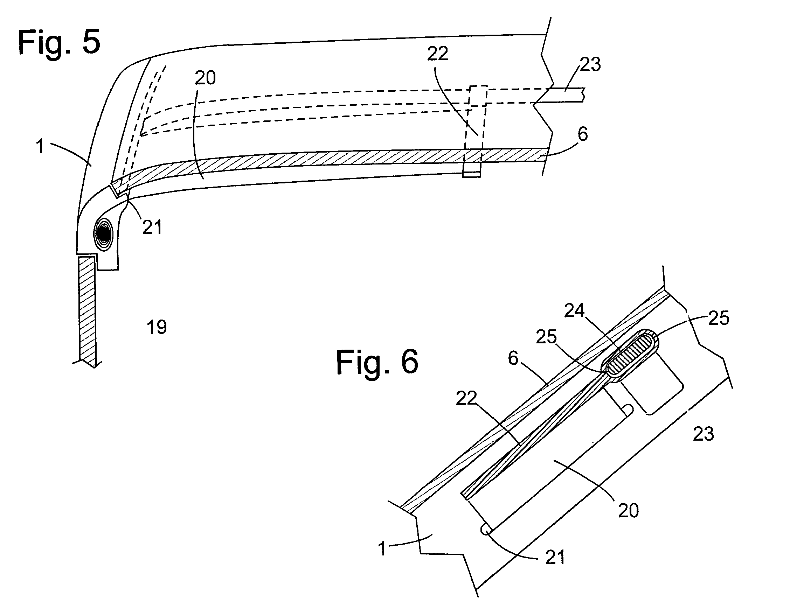

Eine alternative Ausgestaltung einer Sonnenblende für das Fahrzeug der Fig. 1 ist in Figs. 5 und 6 anhand von zwei schematischen Schnitten dargestellt. Der Schnitt von Fig. 5 erstreckt sich in einer vertikalen Ebene quer zur Fahrtrichtung durch die Windschutzscheibe 6, eine der A-Säulen 1 und den oberen Bereich eines Türfensters, dessen Scheibe 19 ungerahmt unmittelbar die A-Säule 1 berührt. Flexible Dichtungen zwischen der A-Säule 1 und den Scheiben 6 bzw. 19 sind der Einfachheit halber in der Figur nicht dargestellt.

In einem internen Hohlraum der A-Säule 1 ist eine Rolle untergebracht, auf der eine Bahn 20 aus lichtundurchlässigem Material, z.B. aus Textil oder Kunststoff, aufgewickelt ist. Die Bahn 20 ist durch einen Schlitz 21 aus der A-Säule 1 herausgeführt und stirnseitig an einer Trägerleiste 22 befestigt, die ihrerseits auf einem Bügel 23 verschiebbar geführt ist, der sich unterhalb der Windschutzscheibe 6 in geringem Abstand von dieser von einer A-Säule 1 zur gegenüberliegenden erstreckt. Die Trägerleiste 22 kann z.B., wie in Fig. 6 gezeigt, an einem Ende eine Öse 24 aufweisen, durch die sich der Bügel 23 mit unrundem Querschnitt erstreckt, so dass die Trägerleiste 22 nicht um den Bügel 23 drehbar ist, sondern im Wesentlichen parallel zur Scheibe 6 gehalten ist. Die Rolle im Innern der A-Säule 1 ist durch eine Feder mit Drehmoment beaufschlagt, so dass sie ständig eine Zugkraft auf die herausgezogene Bahn 20 ausübt, die diese zwischen dem Schlitz 21 und der Trägerleiste 22 straff hält. Um ein Verrutschen der Trägerleiste 22 unter der Kraft der Feder zu verhindern, kann diese beispielsweise an dem Bügel 23 festklemmbar ausgeführt sein, oder der Bügel 23 ist an den Schmalseiten 25 seines Querschnitts leicht quer geriffelt, so dass die Trägerleiste 22 unter der Zugkraft der Feder am Bügel 23 verkantet und nur dann daran verschiebbar ist, wenn ein Benutzer die Verkantung löst.

### Bezugszeichenliste

- A-Säule: 1
- Vorderer Kotflügel: 2
- Vorderer Kotflügel: 3
- B-Säulen: 4
- Bügel: 5
- Windschutzscheibe: 6
- Vordersitz: 7
- Dachsegment: 8
- Längsstreben: 9
- Querstrebe: 10
- Glasscheibe: 11
- Heckscheibensegment: 12
- Heckscheibe: 13
- Seitenwangen: 14
- Kofferraumklappe: 15
- Hintere Tür: 16
- Dachabschnitt: 17
- Blendabschnitt: 18
- Scheibe: 19
- Bahn: 20
- Schlitz: 21
- Trägerleiste: 22
- Bügel: 23
- Öse: 24
- Schmalseite: 25

## Patentansprüche

1. Cabriolet mit einer Karosserie, einer Windschutzscheibe (6) sowie mit wenigstens einem Dachsegment (8) und einer Heckscheibe (13), die zwischen einer ein geschlossenes Dach bildenden Stellung und einer zurückgezogenen Stellung beweglich sind, **dadurch gekennzeichnet, dass** die Windschutzscheibe (6) sich bis zu B-Säulen (4) der Karosserie erstreckt und an den B-Säulen (4) abgestützt ist.

2. Cabriolet nach Anspruch 1, **dadurch gekennzeichnet, dass** es viertürig ist.

3. Cabriolet nach Anspruch 1 oder 2, **dadurch gekennzeichnet, dass** die B-Säulen (4) durch einen die Windschutzscheibe (6) abstützenden Bügel (5) verbunden sind.

4. Cabriolet nach einem der vorhergehenden Ansprüche, **dadurch gekennzeichnet, dass** das wenigstens eine Dachsegment (8) mit Glas ausgeführt ist.

5. Cabriolet nach Anspruch 4, **dadurch gekennzeichnet, dass** das Glas elektrochromatisch ist.

6. Cabriolet nach einem der vorhergehenden Ansprüche, **dadurch gekennzeichnet, dass** die Windschutzscheibe (6) auf wenigstens einem Teil ihrer Fläche elektrochromatisch ist.

7. Cabriolet nach Anspruch 7, **dadurch gekennzeichnet, dass** der elektrochromatische Teil der Windschutzscheibe (6) wenigstens zwei unabhängig voneinander verdunkelbare Zonen /17, 18) umfasst.

8. Cabriolet nach einem der vorhergehenden Ansprüche, **dadurch gekennzeichnet, dass** eine Sonnenblende (20) an einer A-Säule (1) versenkbar montiert ist.

9. Cabriolet nach einem der vorhergehenden Ansprüche, **dadurch gekennzeichnet, dass** Dachsegment (8) und Heckscheibe (13) in der zurückgezogenen Stellung in einem Kofferraum aufgenommen sind.

10. Cabriolet nach einem der vorhergehenden Ansprüche, **dadurch gekennzeichnet, dass** es rahmenlose Türfenster aufweist.
